# EUROPÄISCHE PATENTSCHRIFT

(11) **EP 1 168 280 B1**
(45) Veröffentlichungstag und Bekanntmachung des Hinweises auf die Patenterteilung: **08.06.2005**
(21) Anmeldenummer: 00113800.7
(22) Anmeldetag: 29.06.2000
(51) Int. Cl.: G09F 3/02, B31D 1/02

(54) **Verfahren zum Herstellen von Etiketten**
Method for Producing labels
Procédé pour fabriquer des étiquettes

(43) Veröffentlichungstag der Anmeldung: 02.01.2002
(73) Patentinhaber: OSTE DRUCK BERNHARD J. BORGARDT GMBH & CO. KG, 27432 Bremervörde (DE)
(72) Erfinder: Borgardt, Detta, 27423 Bremervörde (DE)
(74) Vertreter: Becker Kurig Straus

(56) Entgegenhaltungen:
- US-A- 4 152 387
- US-A- 4 626 460
- US-A- 5 019 436
- US-A- 5 914 165

## Beschreibung

Der Gegenstand der vorliegenden Erfindung ist ein Verfahren zum Herstellen von Etiketten durch Koextrusion gemäß dem Oberbegriff von Anspruch 1.

Selbstklebende Etiketten haben in der Verpackungstechnik hohe Bedeutung. Sie bestehen aus einem silikonisierten Papier, das als Trägermaterial dient, einem Klebe- bzw. Haftvermittler und einer als Druckträger dienenden, vorzugsweise kaschierten Kunststoffschicht.

Es ist bereits bekannt, die für die Haftetiketten dienende Kunststoff-Folie zu extrudieren, mit Kleber zu beschichten und in einer Kaschieranlage mit Silikonpapier zusammenzufahren. Ein derartiges Verfahren beschreibt beispielsweise WO 95/34263. Der Verbund von Träger und Etikettenschicht wird sodann auf der gesamten Bahn bedruckt und der gegebenenfalls Druckauftrag getrocknet. Wenn der Verbund eine laseropakes Material enthaltende Schicht und eine weitere von laseropaken Material-freie Schicht umfasst, empfiehlt sich ein Laserdruck. Weiterhin kommt als Druckverfahren der Offset-, der Flexo-, der Tief- und der Buchdruck sowie die anschließende UV-Trocknung in Betracht. Vor dem Stanzen wird eine dünne Schutzschicht-Folie fakultativ aufgetragen, um den Druckauftrag zu schützen. Als Schutzschicht-Folie kommt insbesondere eine biaxial verstreckte Polypropylen-Folie (OPP) in Betracht. Der Schichtverbund wird sodann in einer Rotationsstanze zur Bildung der einzelnen Etiketten gestanzt.
Sodann wird das Stanzgitter abgezogen und die nebeneinander liegenden Bahnen (etwa 5 bis 10) werden ebenso wie das Stanzgitter separat aufgewickelt. Die einzelnen Bahnen werden sodann mit einem Rollenschneider zerteilt und anschließend in einer Endkontrolle auf Fehler untersucht, ob Etiketten fehlen. Beim Etikettiervorgang werden die Etiketten abgezogen, d.h. vereinzelt und auf die zu etikettierenden Behälter aufgebracht. Alternativ ist es bekannt, die Behälter unmittelbar mit einem Dekor zu bedrukken. Bei diesem Direktdruckverfahren sind jedoch nur Dekore minderer Qualität erhältlich.

Schließlich ist das sogenannte IML-Verfahren (in-mold-labling) bekannt. Dabei wird das unbeschichtete Etikett in eine Form eingelegt, und bei der Herstellung des Behälters im Thermoform- oder Spritzgußverfahren verbindet sich das Etikett mit dem Behältermaterial aufgrund der Temperaturerwärmung ohne Haftvermittlung. Dabei sind die Materialien von Etikett und Produkt möglichst identisch zu wählen, d.h. Polyethylen (PE) zu PE bzw. Polypropylen (PP) zu PP. Das Etikett kann weiterhin aus mehreren koextrudierten Schichten bestehen. Dabei kann, wie in JP 05333785 beschrieben, die Druckfläche an der Außenschicht auf Olefinbasis haften, während die Trägerschicht aus einem Ethylen/Vinylacetat-Harz, Ethylen/Ethylacrylat-Harz oder einem Ionomerharz besteht.

Das IML-Verfahren ist technisch aufwendig und kostenintensiv. Ferner ist auch bei dem IML-Verfahren keine Beschichtung mit hochglanzkaschierten Etiketten möglich und deren Qualität bleibt unerreichbar.

Bei dem eingangs genannten Verfahren der Herstellung von selbstklebenden Haftetiketten ist zwar die Herstellung von hochglanzkaschierten Haftetiketten möglich, so daß auch höchste Qualitätsansprüche befriedigt werden können. Bei der Herstellung dieser Etiketten entsteht jedoch ein erheblicher, nicht recycelfähiger Abfall. Sowohl das Sitikonpapier als auch die Stanzgitter werden in der Regel keinem Recycling zugeführt.

Die Preise für hochglanzkaschierte Haftetiketten sind hoch. Sie führen zu einer enorman Verteuerung der Verpackungstechnik.

Aufgabe der vorliegenden Erfindung ist daher die Anwendung eines Verfahrens zur Herstellung von Etiketten, bei dem ein Recycling des bei der Herstellung entstehenden Abfalls möglich ist und die Etiketten einfach und kostengünstig hergestellt werden können.

Erfindungsgemäß wird angegeben ein Verfahren zur Herstellung von Etiketten durch Koextrudieren einer Trägerschicht und einer Etikettenschicht, wobei die Trägerschicht und die Etikettenschicht aus unterschiedlichen Kunststoff-Materialien gefertigt sind und durch Adhäsion aneinander haften, wobei die koextrudierten Schichten gekühlt und voneinander getrennt werden und die Etikettenschicht mit einem Kleber beschichtet wird und mit der Trägerschicht zusammengefahren wird. Die durch Adhäsion aneinander haftenden möglichst inkompatiblen Kunststoffe, z. B. Polystyrol (PS)/PP oder PE/PP gehen keine Verbindung ein, haften jedoch aneinander. Der Kleber kann jedoch erst nach Abkühlung der Schichten und Trennung der Bahnen auf die Etikettenschicht aufgebracht und anschließend die Etikettenschicht mit der Trägerschicht wieder verbunden werden. Sodann läßt sich der hergestellte Trägerschicht / Etikettenschichtverbund in herkömmlich bekannter Weise weiterverarbeiten. Dabei kann die Trägerschicht nach Abzug von der Etikettenschicht zu 100 % recycelt werden. Das abgezogene Stanzgitter kann ebenfalls zu 100 % recycelt werden.

In einer weiteren Ausführungsform wird der Etikettenschichtstrang gemeinsam mit einer Trägerschicht und einer dazwischenliegenden Kleberschicht im Koextrusionsverfahren in einem Arbeitsgang hergestellt.

In einer weiteren Ausführungsform werden aus dem Etikettenschichtstrang zwei Etikettenschichten zusammen mit der Trägerschicht extrudiert, wobei die Etikettenschichten beiderseits der Trägerschicht angeordnet sind. Bei diesem Verfahren werden drei Folienschichten aus zwei Strängen gebildet, wobei der Etikettenschichtstrang in zwei Folienschichten aufgespalten und beiderseits der Trägerschicht angeordnet wird. Auf diese Weise werden auf einer Trägerschicht beiderseits sandwichartig Etikettenschichten vorgesehen, so daß ohne Erhöhung des Trägermaterials eine verdoppelte Etikettenausbeute erzielt wird.

In einer weiteren Ausführungsform ist die Etikettenschicht transparent und wird in einem Konterdruckverfahren so gedruckt, daß das aufzubringende Muster spiegelverkehrt aufgedruckt ist. Sodann wird die bedruckte Etikettenschicht mit Kleber beschichtet und zur Bildung der Etiketten gestanzt. Nach Abzug des Stanzgitters wird die Etikettenschicht auf einer Rolle unter Transfer der Etiketten auf die Rückseite der benachbarten Trägerschicht aufgewickelt. Bei diesem Verfahren entfällt die Aufkaschierung einer Schutzschicht-Folie zum Schutz des Druckauftrages, denn bei den fertigen Etiketten bildet die transparente Folie die Außenseite und schützt den auf der Innenseite liegenden Druckauftrag. Die zunächst auf dem ersten Träger befindliche transparente Folie wird nach Konterbedruckung, Beschichtung mit Kleber, Stanzen und Abzug des Stanzgitters aufgewickelt, wobei sich ein Labeltransfer von dem ersten Träger auf die Rückseite des nächstliegenden benachbarten Trägers ergibt, wo die transparente Folie aufgrund der Klebebeschichtung haftet. Dabei muß die Klebekraft des beschichteten Klebers stärker sein als die Adhäsionskraft zwischen erstem Träger und transparenter Etikettenfolie.

Es ist weiterhin möglich, daß die durch Adhäsion aneinander haftenden Schichten bedruckt und gestanzt und die gebildeten Etiketten zur Verwendung in einer IML-Vorrichtung abgezogen werden. Hierbei steht nicht die Herstellung von Haftetiketten im Vordergrund. Vielmehr werden die Etiketten ohne Klebeauftrag für das IML (in-mold-labling)-Verfahren auf dem Trägerband herangeführt und gestanzt. Anschließend werden die Etikettenlabel in einer IML-Maschine abgenommen und in die IML-Form eingebracht.

Weitere Vorteile, Merkmale und Anwendungsmöglichkeiten ergeben sich aus der nachfolgenden Beschreibung von bevorzugten Ausführungsbeispielen.

In einem ersten Ausführungsbeispiel wird eine PS-Kunststoff-Folie und eine PP-Kunststoff-Folie koextrudiert. Die PS-Kunststoff-Folie dient als Trägerschicht, während die PP-Kunststoff-Folie als Etikettenschicht dient. Die beiden Schichten haften durch Adhäsion aneinander. Nach Kühlen der Schichten werden die Bahnen getrennt und die Etikettenschicht wird mit einem Klebematerial kalt beschichtet. Anschließend werden die Schichten wieder miteinander zusammengefahren. Der Schichtverbund kann in herkömmlicher Weise weiterverarbeitet werden. Beispielsweise wird die gesamte Bahn im Offset und nachfolgender UV-Trocknung bedruckt. Eine dünne Schutzschicht-Folie wird vor dem Stanzen als biaxial verstreckte PP-Folie aufgebracht. Der Schichtverbund wird mit einer Rotationsstanze gestanzt. Das Stanzgitter wird abgezogen und recycelt. Die Bahnen werden separat vom Stanzgitter aufgewickelt. In einem Rollenschneider werden die einzelnen Bahnen zerteilt und anschließend in einer Endkontrolle auf Fehler untersucht. Schließlich werden die Etiketten abgezogen und auf die zu etikettierenden Behälter aufgebracht.

In einem alternativen Verfahren werden gemäß einem zweiten Ausführungsbeispiel drei Schichten extrudiert, wobei zwei Schichten aus einem Strang, insbesondere dem Etikettenschicht-Strang gewonnen werden.

Beispielsweise wird eine Trägerschicht aus PE und zwei Etikettenschichten aus PP hergestellt. Die Trägerschicht aus PE befindet sich in der Mitte, während die beiden Etikettenschichten aus PP beidseitig koextrudiert sind. Sodann werden beide Etikettenschichten im kalten Zustand von der Trägerschicht getrennt, mit Klebematerial beschichtet und mit der Trägerschicht wieder zusammengefahren. Der schließlich erhaltene Schichtverbund stellt beidseitig verwendbare Etikettenschichten dar.

In einem dritten Ausführungsbeispiel wird eine Trägerschicht aus PP und eine transparente Folie aus PS koextrudiert. Die transparente Folie wird im Konterdruck bedruckt. Auf dem Druckauftrag wird eine Kleberbeschichtung aufgebracht. Schließlich wird gestanzt und das Stanzgitter abgezogen. Der verbleibende Schichtverbund wird aufgewickelt, wobei die außen liegende Kleberschicht mit der Rückseite der benachbarten Trägerschicht in Kontakt steht. Auf diese Weise kommt ein Labeltransfer zustande und die transparente Folie mit Konterdruckschicht und Kleberauftrag haftet an der Rückseite der benachbarten Trägerschicht und bildet auf diese Weise die Endschicht. Bei diesem Verfahren kann die Aufkaschierung einer zusätzlichen Schutzschichtfolie entfallen, da die transparente Folie den Kleber und den Konterdruckauftrag wirksam schützt.

## Patentansprüche

1. Verfahren zum Herstellen von Etiketten durch Koextrudieren einer Trägerschicht und einer Etikettenschicht, wobei die Trägerschicht und die Etikettenschicht aus unterschiedlichen Kunststoff-Folien gefertigt sind und durch Adhäsion aneinander haften, **dadurch gekennzeichnet, daß** die koextrudierten Schichten gekühlt und voneinander getrennt werden und daß die Etikettenschicht mit einem Kleber beschichtet wird und mit der Trägerschicht zusammengefahren wird.

2. Verfahren zum Herstellen von Etiketten nach Anspruch 1, wobei aus einem Etikettenschichtstrang zwei Etikettenschichten zusammen mit der Trägerschicht extrudiert werden, wobei die Etikettenschichten die Trägerschicht sandwichartig einschließen.

3. Verfahren zum Herstellen von Etiketten nach Anspruch 1, **dadurch gekennzeichnet, daß** die Etikettenschicht transparent ist, in einem Konterdruckverfahren gedruckt wird, mit Kleber beschichtet und zur Bildung der Etiketten gestanzt wird, wobei ein Stanzgitter abgezogen wird, und die Etikettenschicht auf einer Rolle unter Transfer der Etiketten auf eine Rückseite der benachbarten Trägerschicht aufgewickelt wird.

## Claims

1. Method for producing labels by the coextrusion of a substrate and a label layer whereby the substrate and the label layer are made of different plastic sheets and adhere together, **characterised in that** the coextruded layers are cooled and separated from each other and that the label layer is coated with adhesive and then re-joined with the substrate.

2. Method for producing labels according to claim 1, whereby two label layers are extruded together with the substrate from a label layer strand, whereby the label layers sandwich the substrate.

3. Method for producing labels according to claim 1, **characterised in that** the label layer is transparent, is printed in a counter-pressure process, coated with adhesive and stamped to form the labels, whereby a stamped grid is pulled away and the label layer is wound onto a roll, transferring the labels onto the rear of the adjacent substrate.

## Revendications

1. Procédé de fabrication d'étiquettes par coextrusion d'une couche de support et d'une couche d'étiquettes, sachant que la couche de support et la couche d'étiquettes sont constituées de différentes feuilles en matière plastique et adhèrent l'une à l'autre, **caractérisé en ce que** les couches coextrudées sont refroidies et séparées l'une de l'autre et **en ce que** la couche d'étiquettes est enduite d'un adhésif et jointe à la couche de support.

2. Procédé de fabrication d'étiquettes selon la revendication 1, sachant que deux couches d'étiquettes sont extrudées avec la couche support à partir d'un boyau de couches d'étiquettes, et sachant que la couche de support est prise en sandwich entre les couches d'étiquettes.

3. Procédé de fabrication d'étiquettes selon la revendication 1, **caractérisé en ce que** la couche d'étiquettes est transparente, imprimée au moyen d'un procédé d'impression verso, enduite d'adhésif et estampée pour produire des étiquettes, sachant qu'une grille d'estampage est supprimée et que la couche d'étiquettes s'enroule sur une bobine pendant le transfert des étiquettes sur une face verso de la couche support contiguë.
